# EUROPÄISCHE PATENTSCHRIFT

(11) **EP 0 975 463 B1**
(45) Veröffentlichungstag und Bekanntmachung des Hinweises auf die Patenterteilung: **02.01.2003**
(21) Anmeldenummer: 98916902.4
(22) Anmeldetag: 07.03.1998
(51) Int. Cl.: B32B 17/10, C03C 27/12

(54) **VERFAHREN ZUR HERSTELLUNG EINER GEBOGENEN VERBUNDSICHERHEITSGLASSCHEIBE**
PROCESS FOR PRODUCING A CURVED LAMINATED SAFETY GLASS SHEET
PROCEDE POUR LA PRODUCTION DE VITRES FEUILLETEES DE SECURITE INCURVEES

(30) Priorität: 19.03.1997 DE 19711459
(43) Veröffentlichungstag der Anmeldung: 02.02.2000
(73) Patentinhaber: Pilkington Automotive Deutschland GmbH, 58455 Witten (DE)
(72) Erfinder: COSTA, Peter, D-58455 Witten (DE)
(74) Vertreter: Niemann, Uwe, Dr.-Ing.
(86) Internationale Anmeldenummer: EP9801347
(87) Internationale Veröffentlichungsnummer: WO98041396

(56) Entgegenhaltungen:
- EP-A- 0 457 209
- EP-A- 0 707 951
- DE-A- 19 534 420
- PATENT ABSTRACTS OF JAPAN vol. 010, no. 040 (M-454), 18.Februar 1986 & JP 60 193638 A (ASAHI GLASS KK), 2.Oktober 1985,

## Beschreibung

Die Erfindung bezieht sich auf ein Verfahren zur Herstellung einer gebogenen Verbundsicherheitsglasscheibe aus einer ersten gebogenen Glasscheibe, einer ersten Verbundschicht, einer mit einem Dünnschichtsystem versehenen thermoplastischen Trägerfolie, einer zweiten Verbundschicht sowie einer zweiten, passend zur ersten gebogenen Glasscheibe.

Verbundsicherheitsglasscheiben des vorgenannten Aufbaus werden zunehmend als Sonnenschutzscheiben, insbesondere für Kraftfahrzeuge, eingesetzt. Zu diesem Zweck besteht das Dünnschichtsystem auf der Trägerfolie typischerweise aus bis zu drei Edelmetallschichten, bevorzugt auf Basis von Silber, die in dielektrische Schichten eingebettet sind (US 47 99 745 A1). Durch die Verwendung einer thermoplastischen Folie als Träger für das Dünnschichtsystem wird erreicht, daß die Trägerfolie sich der Biegung der Glasscheiben im Zuge der für den Verbund erforderlichen Wärmebehandlung anpassen kann. Die Anpassungsverformung der Trägerfolie wird dadurch unterstützt, daß biaxial verstreckte thermoplastische Trägerfolien verwendet werden. Hinweise zur Auswahl geeigneter Trägerfolien sind z.B. der EP 00 77 672 B2 und der EP 0 457 209 A2 zu entnehmen. Besonders gut für gebogene Verbundsicherheitsglasscheiben geeignete biaxial verstreckte Trägerfolien sind Gegenstand der älteren PCT-Anmeldung EP96-04018 (WO 97/10099, Flachglas Automotive GmbH). Die beiden Verbundschichten sorgen für eine adhäsive Verbindung der Trägerfolie mit den Glasscheiben und vermitteln dem Laminat Sicherheitsglaseigenschaften.

Für die Herstellung von Verbundsicherheitsglasscheiben des vorgenannten Aufbaus wurde bereits vorgeschlagen, ein Folienvorlaminat aus der ersten Verbundschicht, der mit dem Dünnschichtsystem versehenen Trägerfolie sowie der zweiten Verbundschicht zu bilden, indem die Folien miteinander verpreßt, entlüftet und unter Anwendung von Wärme vorverbunden werden (EP 0 535 128 B1). Das so gebildete Folienvorlaminat wird zwischen die beiden Glasscheiben gelegt, wonach das Laminat aus Glasscheiben und Folienvorlaminat einem Entlüftungsprozeß sowie einem Vorverbundprozeß unterworfen wird. Abschließend wird das Laminat bei erhöhter Temperatur sowie hohem Druck zu Verbundsicherheitsglas endverbunden. Diese Verfahrensweise hat sich bei relativ schwach gebogenen Glasscheiben bewährt. Bei stärkeren Biegungen, insbesondere bei komplexen Biegungen, kommt es jedoch in der Praxis häufig vor allem im Randbereich zu einer Faltenbildung in der Trägerfolie, auch als Randwelligkeit bezeichnet. Zur Lösung dieses Problems wurden bereits verschiedene Maßnahmen vorgeschlagen, bei denen ein Vorlaminat aus mindestens einer Verbundschicht sowie der Trägerfolie in einer besonderen Vorrichtung geeignet vorgeformt wird (WO 94/04357). Ein solches Verfahren ist aufwendig und bedarf für jeden Scheibentyp einer gesondert anzufertigenden Form. Toleranzbedingte Abweichungen der Glasscheiben von der Sollform können bei dem vorbekannten Verfahren außerdem zu die Optik der fertigen Verbundsicherheitsglasscheibe beeinträchtigenden Anpassungsfehlern beim Verbund zwischen den Glasscheiben und dem Folienvorlaminat führen.

Der Erfindung liegt daher die Aufgabe zugrunde, ein verbessertes Herstellverfahren für Verbundsicherheitsglasscheiben des vorgenannten Aufbaus anzugeben, mit dem das Auftreten von Falten in der Trägerfolie während der Herstellung besser vermieden werden kann und das insbesondere die Herstellung komplex gebogener Verbundsicherheitsglasscheiben ohne nennenswerte Faltenbildung jedenfalls im Sichtbereich der Scheiben ermöglicht. Die endverbundene Verbundsicherheitsglasscheibe soll weitestgehend frei sein von durch ungewollte Verformungen der mit dem Dünnschichtsystem versehenen Trägerfolie verursachten optischen Störungen vor allem im reflektierten, aber auch im durchgelassenen Licht.

Zur Lösung dieser Aufgabe schlägt die Erfindung ein Verfahren vor, das durch die Abfolge der in Anspruch 1 aufgeführten Verfahrensschritte (a) - (g) gekennzeichnet ist.

Die Erfindung beruht auf der überraschenden Erkenntnis, daß mit Hilfe eines mehrstufigen Vorverbund- und Endverbundprozesses, bei dem zunächst ein vorverbundenes Vorlaminat aus erster gebogener Glasscheibe, erster Verbundschicht und Trägerfolie mit Hilfe einer auf die Trägerfolie aufgelegten, passend gebogenen biegesteifen Deckscheibe hergestellt wird, bevor die zweite Verbundschicht und die zweite Glasscheibe zunächst mit dem Vorlaminat vorverbunden und sodann das gesamte Laminat endverbunden wird, eine störende Faltenbildung der Trägerfolie zuverlässig vermieden werden kann. Die Erfindung eignet sich ganz besonders für die Herstellung komplex gebogener Kfz-Verbundsicherheitsglasscheiben mit einer Querbiegung von 10 mm und mehr. Die Querbiegung (Stichhöhe) wird dabei standardmäßig für den Bereich der Quer-Mittelachse - das ist im Normalfall die Symmetrieachse bei Windschutz- oder Heckscheiben - angegeben.

Zwar kann gegebenenfalls mit in situ geformten Verbundschichten aus in fließfähigem Zustand auf eine der Glasscheiben oder die Trägerfolie aufgebrachten Verbundmaterialien gearbeitet werden, z.B. mit Gießharzen oder mit in geeigneten Lösungsmitteln aufgelösten und flüssig aufgebrachten Verbundmaterialien. Als Verbundschichten kommen im Rahmen der Erfindung jedoch vorzugsweise oberflächlich genarbte Verbundfolien in üblicher Dicke, d.h. typischerweise 0,38 oder 0,76 mm, aus dem Fachmann für die Verbundglasherstellung bekannten Materialien zum Einsatz.

Als Trägerfolien kommen bevorzugt solche gemäß PCT-Anmeldung EP96-04018 (WO 97/10099) zum Einsatz. Die Erfindung ist jedoch nicht hierauf beschränkt. Entscheidendes Kriterium bei der Material- und Dickenauswahl für eine Trägerfolie im Zusammenhang mit der vorliegenden Erfindung ist deren Kompatibilität mit den Verbundschichten und mit den zum Einsatz kommenden Vorverbund- und Endverbundprozessen sowie das Vorhandensein eines geeigneten Wärmeschrumpfverhaltens, das eine faltenfreie Anpassungsverformung der Trägerfolie im Zuge der Herstellung der Verbundsicherheitsglasscheibe zuläßt. Dabei sind biaxial verstreckte Trägerfolien grundsätzlich zwar bevorzugt. Es können jedoch im Rahmen der Erfindung je nach Biegung der Glasscheiben im Einzelfall auch nicht oder nur schwach verstreckte Trägerfolien verwendet werden. Dies gilt insbesondere dann, wenn Verfahrensschritt (c) bei relativ hohen Temperaturen durchgeführt wird. Die Trägerfolien müssen über eine für die jeweilige Anwendung ausreichende Lichtdurchlässigkeit verfügen, sich als Träger für das Dünnschichtsystem eignen und beidseitig eine gute Haftung zu den Verbundschichten aufweisen.

Bevorzugt wird bei dem erfindungsgemäßen Verfahren ein Folienvorlaminat verwendet, bei dem das Dünnschichtsystem der Trägerfolie an die erste Verbundschicht angrenzt. Das Dünnschichtsystem ist auf diese Weise vor Beschädigungen im Zuge des Herstellverfahrens, insbesondere bei den Verfahrensschritten (b) und (e), geschützt. Für die Herstellung des Folienvorlaminats kann beispielsweise die Trägerfolie von einer Vorratsrolle abgezogen und unter Anwendung von Druck und Wärme unter gleichzeitiger oder vorheriger Entlüftung mit der von einer Verbundfolie gebildeten ersten Verbundschicht vorverbunden werden.

Für die biegesteife Deckscheibe kann grundsätzlich jedes mit der Trägerfolie des Folienvorlaminats verträgliche und bei den anzuwendenden Temperaturen formstabile, nicht mit der Trägerfolie verklebende Material verwendet werden. Es versteht sich, daß die an die Trägerfolie angrenzende Oberfläche der Deckscheibe möglichst glatt sein muß. Bevorzugt besteht die Deckscheibe aus Glas oder glasartigem Material. Auf diese Weise können bei der Wärmebehandlung des Verfahrensschrittes (c) annähernd gleiche thermische Bedingungen oberhalb und unterhalb des Folienvorlaminats geschaffen werden. Grundsätzlich ist es möglich, ein und dieselbe Glasscheibe mehrfach als Deckscheibe zu verwenden. Von besonderem Vorteil ist es jedoch, wenn die zweite Glasscheibe der herzustellenden Verbundsicherheitsglasscheibe als Deckscheibe für die Verfahrensschritte (b) - (d) verwendet wird. Insbesondere dann, wenn - wie bei der Herstellung von gebogenen Verbundsicherheitsglasscheiben üblich - beide Glasscheiben gemeinsam gebogen werden, kann so erreicht werden, daß die Biegungen von Deckscheibe und erster Glasscheibe gut aufeinander abgestimmt sind, so daß die Deckscheibe bei Verfahrensschritt (c) vollflächig eng an der Trägerfolie des Folienvorlaminats anliegt und eine Faltenbildung zuverlässig verhindert.

Insbesondere dann, wenn der Verfahrensschritt (c) bei relativ hohen Temperaturen erfolgen soll, empfiehlt es sich, die Deckscheibe vor dem Auflegen auf das Folienvorlaminat mit einer haftungsmindernden dünnen Trennschicht zu versehen. Alternativ dazu kann diese auf der Trägerfolie des Folienvorlaminats angeordnet und bevorzugt mit diesem gemeinsam auf die erste Glasscheibe aufgelegt werden. Es muß in jedem Fall vermieden werden, daß die Trägerfolie an der Deckscheibe punktuell so stark haftet, daß bei den Verfahrensschritten (c) oder (d) Partikel aus der Trägerfolie herausgerissen werden, was in der fertigen Verbundsicherheitsglasscheibe zu optischen Beeinträchtigungen führen würde. Dabei hat es sich als besonders vorteilhaft erwiesen, wenn als Trennschicht eine dünne Trennfolie verwendet wird, die an der Trägerfolie unter den Bedingungen des Verfahrensschritts (c) nicht haftet. Als Trennfolien haben sich bei der erfindungsgemäß bevorzugten Verwendung von Trägerfolien aus PET beispielsweise Folien aus Polyethylen (PE) oder aus unbeschichtetem PET sowie Acetatfolien als gut geeignet erwiesen. Diese Materialien sind bei ausreichender Wirksamkeit relativ preiswert, so daß ihr Einsatz nicht zu erheblichen Mehrkosten führt. Die Verwendung von Folien als Trennschicht hat außerdem gegenüber pulverigen oder flüssigen Trennschichten den Vorteil des relativ einfachen Handlings beim Aufbringen vor und beim Entfernen nach dem Verfahrensschritt (c). Es versteht sich, daß die Trennschicht (Trennfolie) eine gleichmäßige Dicke über die gesamte Fläche aufweisen muß, damit nicht bei Verfahrensschritt (c) die Trägerfolie unregelmäßig verformt wird.

Die erste und die zweite Verbundschicht bestehen bevorzugt aus Polyvinylbutyral (PVB) oder Ethylenvinylacetat-Copolymeren (EVA). Besonders für diese Verbundmaterialien ist es von Vorteil, wenn der Verfahrensschritt (c) bei einem Druck von max. 2,5 bar und einer Temperatur erfolgt, die mind. etwa 10 Grad, vorzugsweise mind. etwa 50 Grad, unter der maximal beim Endverbund gemäß Verfahrensschritt (g) angewandten Temperatur liegt. Wenn durch entsprechende Materialauswahl sichergestellt ist, daß die Trägerfolie des Folienvorlaminats an der Deckscheibe gut entlanggleiten kann und an dieser beim Abheben der Deckscheibe nicht punktuell haftet, wird die Temperatur des Verfahrensschritts (c) bevorzugt relativ knapp unter der Temperatur des Endverbunds gemäß Verfahrensschritt (g) eingestellt, so daß sich die Trägerfolie plastisch verformen und der Biegung der ersten Glasscheibe und der Deckscheibe dauerhaft anpassen kann. Da die so erzeugte Anpassungsverformung der Trägerfolie durch den ersten Vorverbundprozeß, bei der das Folienvorlaminat mit der ersten Glasscheibe vorverbunden wird, fixiert wird, kann so die Faltenbildung bei den verbleibenden Verfahrensschritten auf ein Minimum reduziert werden.

Überraschenderweise kann mit dem erfindungsgemäßen Herstellverfahren auch der sogenannte Orangenhauteffekt gegenüber herkömmlichen Verbundverfahren stark reduziert werden. Der vor allem in der Reflexion sichtbare Orangenhauteffekt wird durch die zur Entlüftung erforderlichen Erhebungen der Verbundfolien-Oberflächen hervorgerufen, die sich im Zuge des Verbundprozesses als irreguläre Erhebungen und Vertiefungen in der mit dem Dünnschichtsystem versehenen Trägerfolie abbilden. Dieser unerwünschte Effekt wird vermutlich dadurch, daß die beschichtete Trägerfolie beim Verfahrensschritt (c) gegen die glatte und nicht verformbare Oberfläche der biegesteifen Deckscheibe gepreßt wird und sich die rauhe Entlüftungsoberfläche der angrenzenden ersten Verbundschicht nicht nennenswert in der Trägerfolie abbilden kann, bemerkenswert reduziert, so daß erfindungsgemäß hergestellte Verbundsicherheitsglasscheiben über eine bislang unerreicht gute Reflexionsoptik verfügen.

Erfindungsgemäß liegen, jedenfalls dann, wenn eine biaxial verstreckte Trägerfolie verwendet wird, die Temperaturen der Vorverbund-Wärmebehandlungen der Verfahrensschritte (c) und (f) unter der maximalen Temperatur des Endverbunds gemäß Verfahrensschritt (g), und zwar jeweils um mind. etwa 10 Grad. Hierdurch wird erreicht, daß die Trägerfolie auch nach den beiden Vorverbund-Wärmebehandlungen noch über ein restliches Wärmeschrumpfvermögen verfügt, das dafür sorgt, daß gegebenenfalls vor dem Endverbund vorhandene leichte Verformungen der Trägerfolie beim Endverbund ausheilen können. Bevorzugt werden die Verfahrensschritte (c) und (f) so geführt, daß das restliche Wärmeschrumpfvermögen der biaxial verstreckteh Trägerfolie noch mind. etwa 10%, vorzugsweise mind. etwa 20% des ursprünglichen, durch die biaxiale Verstreckung und Thermofixierung erzeugten Wertes beträgt.

Ein Anhaften von biaxial verstreckten PET-Trägerfolien an der von einer Glasscheibe gebildeten Deckscheibe kann auch ohne Trennschicht und damit kostengünstiger vermieden werden, wenn die Temperatur beim Verfahrensschritt (c) mind. etwa 50 Grad unter der typischerweise etwa 125°C betragenden Endverbundtemperatur, also bei etwa 75°C, bleibt. In diesem Falle weist die Anpassungsverformung der auf ein Ausheilen der biaxialen Verstreckung bei höheren Temperaturen eingestellten Trägerfolie bei Verfahrensschritt (c) noch nennenswerte elastische Volumenanteile auf, so daß erst bei Verfahrensschritt (f) oder beim Endverbund (Verfahrensschritt (g)) die endgültige plastische Verformung der Trägerfolie erfolgt, was allerdings in ungünstigen Fällen zu leichter Faltenbildung oder geringfügig verstärktem Orangenhauteffekt führen kann. Es hat sich herausgestellt, daß Verbundsicherheitsglasscheiben mit im Kfz-Bereich üblichen Abmessungen im Regelfall gut bei niedrigeren Temperaturen bei Verfahrensschritt (c) und damit ohne zusätzliche Trennschicht faltenfrei herstellbar sind. Scheiben mit einer Querbiegung von mehr als 14 mm werden hingegen bevorzugt bei höherer Temperatur und unter Verwendung einer Trennschicht dem Verfahrensschritt (c) unterworfen.

Der Verfahrensschritt (f) erfolgt in einem Wärmebehandlungsofen oder einem Autoklaven vorzugsweise bei einem Druck von max. 2,5 bar und einer Temperatur, die mind. 10 Grad unter der maximal beim Endverbund gemäß Verfahrensschritt (g) angewandten Temperatur liegt. Der Endverbund gemäß Verfahrensschritt (g) wird insbesondere bei einer Temperatur von etwa 115 - 135°C und einem Druck von max. 13 bar durchgeführt. Bei den Vorverbund-Prozessen der Verfahrensschritte (c) und (f) wird mit besonderem Vorteil der aus der Verbundglasherstellung an sich bekannte Lippenvorverbundprozeß eingesetzt, bei dem um die Kante des Glas-Folien-Deckscheiben-Pakets bzw. des Glas-Folien-Glas-Pakets ein an ein Unterdrucksystem angeschlossenes Lippenprofil herumgelegt, die Luft aus den Zwischenräumen zwischen den noch nicht verbundenen Lagen abgesaugt und diese Lagen durch Anwendung einer etwa eine halbe bis eine Stunde dauernden Wärmebehandlung miteinander vorverbunden werden. Es kann aber auch mit anderen an sich bekannten Vorverbund-Prozessen, z.B. mit Vorverbundwalzen oder mit Vakuumsack, gearbeitet werden. Für den Endverbund gemäß Verfahrensschritt (g) wird das vorverbundene Paket aus Glasscheiben, Verbundschichten und Trägerfolie einer ebenfalls aus der Verbundglasherstellung an sich bekannten Autoklavenbehandlung unterzogen.

Im folgenden wird die Erfindung anhand von zwei Ausführungsbeispielen sowie zugehörigen Figuren näher erläutert.

Es zeigen
- Fig.1 a-e: eine Prinzipdarstellung der wesentlichen Schritte des erfindungsgemäßen Verfahrens gemäß dem ersten Ausführungsbeispiel sowie derjenigen Verfahrensschritte des zweiten Ausführungsbeispiels, die mit denen des ersten Ausführungsbeispiels übereinstimmen,
- Fig. 2 a-c: eine Prinzipdarstellung der wesentlichen Schritte des erfindungsgemäßen Verfahrens gemäß dem zweiten Ausführungsbeispiel.

### Beispiel 1

Eine 0,38 mm dicke, beidseitig genarbte PVB-Verbundfolie (2) der Firma Monsanto und eine PET-Trägerfolie (4) mit einer hoch lichtdurchlässigen Sonnenschutzbeschichtung mit einer Doppelsilberschicht (Produktbezeichnung XIR 75) der Firma Southwall als Dünnschichtsystem (3) wurden von Rollen abgezogen, bei etwa 60 bis 80°C unter Einbettung des Dünnschichtsystems (3) zwischen der PET-Trägerfolie (4) und der PVB-Verbundfolie (2) zwischen einem Walzenpaar zu einem entlüfteten und teilverklebten Folienvorlaminat verbunden und anschließend auf passende Maße zugeschnitten.

Die PET-Trägerfolie (4) war vor dem Beschichten biaxial gereckt und thermofixiert worden. Die Verstreckung und Beschichtung war entsprechend PCT-Anmeldung EP96-04018 (WO 97/10099) unter solchen Bedingungen erfolgt, daß die PET-Trägerfolie (4) nach der Beschichtung und vor der Herstellung des Folienvorlaminats das folgende Wärmeschrumpfverhalten aufwies:

Die beschichtete PET-Trägerfolie (4) schrumpft während eines 20 Sekunden dauernden Untertauchens in einem auf 120°C aufgeheizten Flüssigkeitsbad aus Polyethylenglykol (Molekulargewicht etwa 400) in der Folienebene parallel und senkrecht zur Längserstreckung jeweils um etwa 0,4%. Die Messung der Schrumpfung erfolgt dabei so, daß zwischen die Backen einer Längenmeßeinrichtung beide Enden eines Folienstreifens der Länge 150 mm und der Breite von 15 mm eingeklemmt werden. Die Länge des Folienstreifens wird vor dem Eintauchen in das temperierte Bad und nach Beendigung der Wärmebehandlung bei gleicher Ausgangstemperatur gemessen. Daraus errechnet sich die prozentuale Längenänderung als Schrumpfmaß bei vorgegebener Schrumpftemperatur und Verweildauer.

Die beschichtete PET-Trägerfolie (4) wies zur Sicherstellung einer ausreichenden Haftung zu den PVB-Verbundfolien (3, 5) auf beiden Seiten eine Oberflächenenergie von mehr als 40 mJ/m² auf.

Das wie beschrieben hergestellte Folienvorlaminat wurde mit der Verbundfolienseite faltenfrei auf die konkave Seite einer komplex gebogenen, auf einem horizontalen Auflager fixierten ersten Glasscheibe (1) mit einer Dicke von 2,1 mm aufgelegt (Verfahrensschritt (a)). Die etwa 1,50 m lange und 0,90 m breite erste Glasscheibe (1) war sowohl in Längsrichtung als auch - in deutlich geringerem Maße - in Querrichtung gebogen. Ihre Stichhöhe in Längsrichtung lag bei etwa 10 cm, während ihre Querbiegung 12 mm betrug. Sie war entlang ihres Randes mit einem (nicht dargestellten) 25 mm breiten aufgedruckten und eingebrannten opaken Sichtschutzstreifen aus keramischer Farbe versehen.

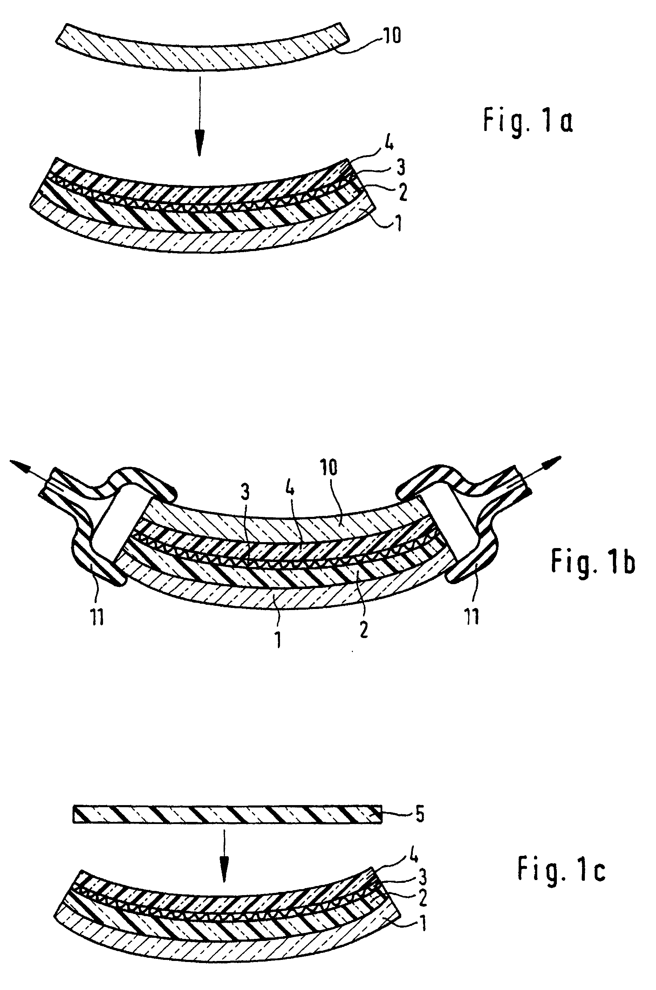

Auf das so gebildete Glas-Folien-Paket wurde, wie in Fig. 1a dargestellt, als Deckscheibe die zweite, 1,5 mm dicke Glasscheibe (10) der herzustellenden Verbundsicherheitsglasscheibe aufgelegt, die zuvor gemeinsam mit der ersten Glasscheibe (1) in einem Schwerkraftbiegeprozeß gebogen worden war (Verfahrensschritt (b)). Um die Kante des Glas-Folien-Deckscheiben-Pakets wurde zur Entlüftung ein Vakuumlippenprofil (11) herumgelegt, über das im Anschluß daran das Paket etwa 20 Minuten entlüftet wurde (Fig. 1b). Das nach wie vor mit Unterdruck beaufschlagte Paket wurde in einem Wärmebehandlungsofen auf etwa 75°C aufgeheizt, etwa eine halbe Stunde auf dieser Temperatur belassen und danach auf Raumtemperatur abgekühlt (Verfahrensschritt (c)). Nach der Abnahme der Deckscheibe (10) (Verfahrensschritt (d)) war erkennbar, daß sich die PET-Trägerfolie (4) faltenfrei an die Form der ersten Glasscheibe (1) angepaßt hatte.

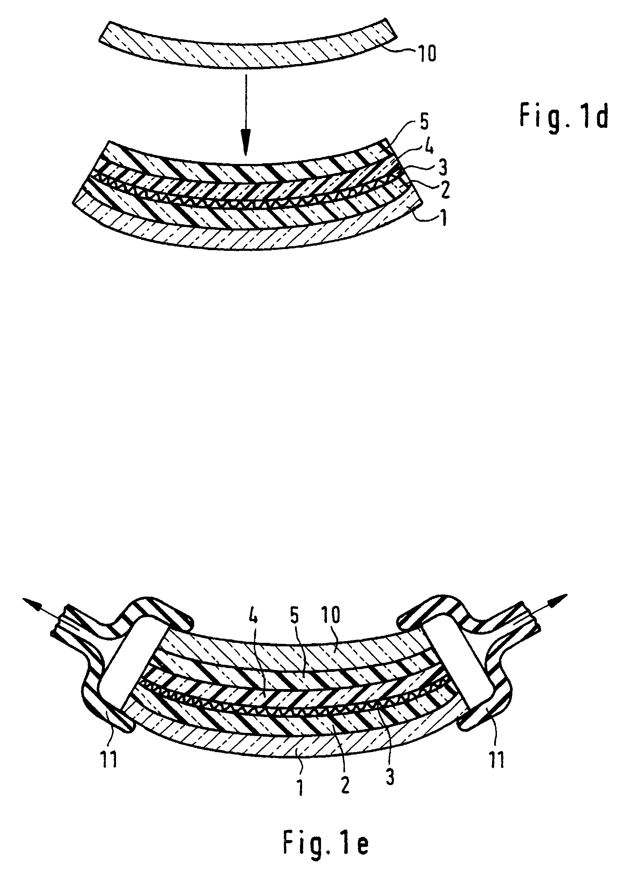

Auf die freiliegende unbeschichtete Seite der PET-Trägerfolie (4) des so gebildeten Glas-Folien-Vorlaminats wurde im in den Fig. 1c und 1d dargestellten nächsten Schritt zunächst eine zweite 0,38 mm dicke genarbte PVB-Verbundfolie (5) der Firma Monsanto (Fig. 1c) und darauf die zuvor als Deckscheibe verwendete zweite Glasscheibe (10) aufgelegt (Fig. 1d, Verfahrensschritt (e)). Die über den Rand der Glasscheiben (1, 10) überstehenden Ränder der PVB-Verbundfolien (2, 5) und der PET-Trägerfolie (4) wurden mit einem Messer abgeschnitten. Um die Scheibenkante wurde, wie beim vorherigen ersten Vorverbundprozeß, ein an ein Unterdrucksystem angeschlossenes Lippenprofil (11) zum Zwecke der Entlüftung herumgelegt.

in dem folgenden Entlüftungsprozeß wurde das Lippenprofil etwa 20 Minuten mit Unterdruck beaufschlagt und das Glas-Folien-Glas-Paket dadurch entlüftet (Fig. 1e). Anschließend wurde es unter Aufrechterhaltung des Unterdrucks in einem Wärmebehandlungsofen mit Hilfe einer etwa halbstündigen Wärmebehandlung bei einer Maximaltemperatur von etwa 100°C vorverbunden (Verfahrensschritt (f)). Hieran schloß sich nach zwischenzeitlicher Abkühlung der Endverbundprozeß in einem Autoklaven an mit einer Aufheizung des vorverbundenen Glas-Folien-Glas-Paketes auf etwa 125°C und einer Druckbehandlung bei bis zu 13 bar (Verfahrensschritt (g)).

Die fertige Verbundsicherheitsglasscheibe wurde nach der Entnahme aus dem Autoklaven einer Kontrolle der Reflexions- und Transmissionsoptik unterworfen. Zwar war innerhalb des durch den Sichtschutzstreifen abgedeckten Scheibenrands bereichsweise eine leichte Welligkeit der PET-Trägerfolie feststellbar. Im Sichtbereich war die beschichtete PET-Trägerfolie (4) jedoch faltenfrei. Sie zeigte nur einen sehr geringen, mit bloßem Auge kaum erkennbaren Orangenhauteffekt. Insgesamt entsprach die Glasscheibe den strengen Anforderungen an Front- oder Heckscheiben von Kraftfahrzeugen hinsichtlich Sicherheitseigenschaften und Reflexions- sowie Transmissionsoptik.

### Beispiel 2

Entsprechend Beispiel 1 wurde zunächst ein Folienvorlaminat aus einer 0,38 mm dicken, beidseitig genarbten PVB-Verbundfolie (2) und einer PET-Trägerfolie (4) mit einer hoch lichtdurchlässigen Sonnenschutzbeschichtung als Dünnschichtsystem (3) hergestellt.

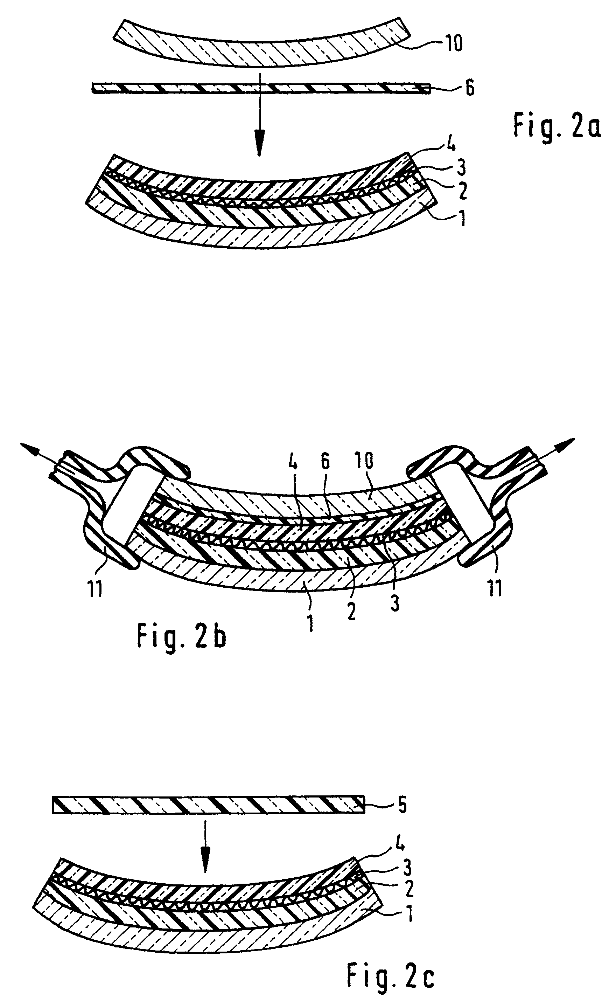

Das Folienvorlaminat wurde mit der Verbundfolienseite faltenfrei auf die konkave Seite einer komplex gebogenen, auf einem horizontalen Auflager fixierten ersten Glasscheibe (1) mit einer Dicke von 2,1 mm aufgelegt (Verfahrensschritt (a)) Die erste Glasscheibe (1) hatte die gleichen Abmessungen wie diejenige aus Beispiel 1 und war sowohl in Längsrichtung als auch in Querrichtung gebogen. ihre Stichhöhe in Längsrichtung lag wie in Beispiel 1 bei etwa 10 cm, während ihre Querbiegung 15 mm betrug. Sie war entlang ihres Randes mit einem (nicht dargestellten) 25 mm breiten aufgedruckten und eingebrannten opaken Sichtschutzstreifen versehen. Anders als in Beispiel 1 wurde zusammen mit dem Folienvorlaminat eine auf dessen Trägerfolienseite angeordnete, als Trennschicht für den Verfahrensschritt (c) fungierende, unbeschichtete, etwa 25 µm dicke PET-Trennfolie (6) aufgelegt. Auf das so gebildete Glas-Folien-Paket wurde als Deckscheibe eine zweite, 1,5 mm dicke Glasscheibe (10) aufgelegt, die zuvor gemeinsam mit der ersten Glasscheibe (1) in einem Schwerkraftbiegeprozeß passend gebogen worden war (Fig. 2a, Verfahrensschritt (b)). Um die Kante des Glas-Folien-Deckscheiben-Pakets wurde zur Entlüftung ein Vakuumlippenprofil (11) herumgelegt, über das im Anschluß daran das Paket etwa 20 Minuten entlüftet wurde (Fig. 2b). Das nach wie vor mit Unterdruck beaufschlagte Paket wurde in einem Wärmebehandlungsofen auf etwa 115°C aufgeheizt, etwa 30 Minuten auf dieser Temperatur belassen und danach auf Raumtemperatur abgekühlt (Verfahrensschritt (c)). Nach der Abnahme der Deckscheibe (10) (Verfahrensschritt (d)) und der PET-Trennfolie (6) war erkennbar, daß sich die PET-Trägerfolie (4) faltenfrei an die Form der ersten Glasscheibe (1) angepaßt hatte.

Auf die freiliegende unbeschichtete Seite der PET-Trägerfolie (4) des so gebildeten Glas-Folien-Vorlaminats wurde im nächsten Schritt zunächst eine zweite, 0,76 mm dicke genarbte PVB-Verbundfolie (5) mit Blendschutzfarbkeil der Firma Monsanto (Fig. 2c) und darauf die zuvor als Deckscheibe verwendete zweite Glasscheibe (10), von der die PET-Trennfolie entfernt worden war, aufgelegt (Fig. 1c und 1d, Verfahrensschritt (e)). Die über den Rand der Glasscheiben (1, 10) überstehenden Ränder der PVB-Verbundfolien (2, 5) und der PET-Trägerfolie (4) wurden mit einem Messer abgeschnitten. Um die Scheibenkante wurde, wie beim vorherigen ersten Vorverbundprozeß, ein an ein Unterdrucksystem angeschlossenes Lippenprofil (11) zum Zwecke der Entlüftung herumgelegt (Fig. 1e).

In dem folgenden Entlüftungsprozeß wurde das Lippenprofil (11) etwa 20 Minuten mit Unterdruck beaufschlagt und das Glas-Folien-Glas-Paket dadurch entlüftet. Anschließend wurde es unter Aufrechterhaltung des Unterdrucks in einem Wärmebehandlungsofen mit Hilfe einer etwa halbstündigen Wärmebehandlung bei einer Maximaltemperatur von etwa 100°C vorverbunden (Verfahrensschritt (f)). Hieran schloß sich nach zwischenzeitlicher Abkühlung der Endverbundprozeß in einem Autoklaven an mit einer Aufheizung des vorverbundenen Glas-Folien-Glas-Paketes auf etwa 125°C und einer Druckbehandlung bei bis zu 13 bar (Verfahrensschritt (g)).

Die fertige Verbundsicherheitsglasscheibe wurde nach der Entnahme aus dem Autoklaven einer Kontrolle der Reflexions- und Transmissionsoptik unterworfen. Im gesamten Sichtbereich war die beschichtete PET-Trägerfolie (4) faltenfrei. Es war außerdem praktisch kein Orangenhauteffekt erkennbar. Insgesamt entsprach die Glasscheibe den strengen Anforderungen an Front- oder Heckscheiben von Kraftfahrzeugen hinsichtlich Sicherheitseigenschaften und Reflexions- sowie Transmissionsoptik.

### Vergleichsbeispiel

Eine Verbundsicherheitsglasscheibe mit den gleichen Abmessungen, der gleichen Biegung sowie den gleichen Komponenten wie in Beispiel 1 wurde hergestellt, indem zunächst wie in Beispiel 1 ein entlüftetes und vorverbundenes Vorlaminat aus einer ersten Verbundfolie (2) und einer beschichteten PET-Trägerfolie (4) hergestellt wurde. Das so gebildete Vorlaminat wurde mit seiner Verbundschichtseite auf die erste Glasscheibe (1) aufgelegt. Auf das Vorlaminat wurde eine zweite 0,38 mm dicke PVB-Verbundfolie (5) der Firma Monsanto aufgelegt. Das Glas-Folien-Paket wurde komplettiert durch die passend gebogene zweite Glasscheibe (10), sodann entlüftet und analog zu Verfahrensschritt (f) gemäß Beispiel 1 vorverbunden sowie im Anschluß daran entsprechend Verfahrensschritt (g) endverbunden. Nach dem Vorverbundprozeß hatten sich im Randbereich eine Reihe von Falten in der PET-Trägerfolie (4) gebildet, die bis in den Sichtbereich der Scheibe hinein reichten. Diese Falten heilten auch im sich anschließenden Endverbundprozeß nicht aus, so daß die so hergestellte Verbundsicherheitsglasscheibe wegen mangelhafter optischer Qualität nicht als Kraftfahrzeugscheibe einsetzbar war.

Die Verbundsicherheitsglasscheiben gemäß Beispiel 2 und Vergleichsbeispiel wurden einer Messung ihrer Reflexionsbrechkraft im Sichtbereich unterzogen. Die Messung wurde so durchgeführt, daß die Reflexion an der Scheibenrückseite ausgeblendet wurde, so daß lediglich die mit wenigen Millidioptrien relativ geringe, von der Glasvorderseite verursachte sowie die vergleichsweise hohe, von der beschichteten PET-Trägerfolie herrührende Reflexionsbrechkraft gemessen wurde. Dabei ergaben sich die folgenden Werte:

| | Mittlere Reflexionsbrechkraft [mdpt] | Maximalwert [mdpt] | Standardabweichung [mdpt] |
|---|---|---|---|
| Vergleichsbeispiel | 50,4 | 281,7 | 42,4 |
| Beispiel 2 | 15,5 | 82 | 13,1 |

Es versteht sich, daß bei der Messung der Scheibe des Gegenbeispiels nur faltenfreie Scheibenbereiche ausgewertet wurden, um eine Vergleichbarkeit der Messungen zu gewährleisten. Die Meßergebnisse zeigen, daß es mit dem erfindungsgemäßen Herstellverfahren nicht nur möglich ist, eine störende Faltenbildung der beschichteten Trägerfolie zu vermeiden, sondern auch die Reflexionsoptik der Scheiben gegenüber dem Stand der Technik durch eine Minderung des Orangenhauteffekts um mehr als ein Drittel (ausgedrückt in der Meßgröße Reflexionsbrechkraft) drastisch zu verbessern. Die Anwendung des erfindungsgemäßen Herstellverfahrens erlaubt somit die Herstellung von Verbundsicherheitsglasscheiben mit eingebetteter beschichteter Trägerfolie mit zuvor unerreichter Qualität der Reflexionsoptik.

## Patentansprüche

1. Verfahren zur Herstellung einer gebogenen Verbundsicherheitsglasscheibe aus einer ersten gebogenen Glasscheibe (1), einer ersten Verbundschicht (2), einer mit einem Dünnschichtsystem (3) versehenen thermoplastischen Trägerfolie (4), einer zweiten Verbundschicht (5) sowie einer zweiten, passend zur ersten gebogenen Glasscheibe (10), mit den folgenden Verfahrensschritten:
(a) Ein Folienvorlaminat, bestehend aus der ersten Verbundschicht (2) und der Trägerfolie (4), wird mit seiner Verbundschichtseite auf die erste Glasscheibe (1) aufgelegt,
(b) eine passend zur ersten Glasscheibe (1) gebogene biegesteife Deckscheibe (10) wird auf das Folienvorlaminat aufgelegt,
(c) das aus der ersten Glasscheibe (1) und dem Folienvorlaminat gebildete Glas-Folien-Paket wird entlüftet und unter Anwendung von Druck und Wärme vorverbunden,
(d) die Deckscheibe (10) wird entfernt,
(e) die zweite Verbundschicht (5) und die zweite Glasscheibe (10) werden auf das vorverbundene Glas-Folien-Paket aufgebracht,
(f) das so gebildete Laminat wird entlüftet und unter Anwendung von Druck und Wärme vorverbunden,
(g) das vorverbundene Laminat wird unter Anwendung von Druck und Wärme zu einer Verbundsicherheitsglasscheibe endverbunden.

2. Verfahren nach Anspruch 1, **dadurch gekennzeichnet, daß** eine biaxial verstreckte Trägerfolie (4) verwendet wird.

3. Verfahren nach Anspruch 1 oder 2, **dadurch gekennzeichnet, daß** ein Folienvorlaminat verwendet wird, bei dem das Dünnschichtsystem (3) der Trägerfolie (4) an die erste Verbundschicht (2) angrenzt.

4. Verfahren nach einem der Ansprüche 1 bis 3, **dadurch gekennzeichnet, daß** die zweite Glasscheibe (10) als Deckscheibe (10) verwendet wird.

5. Verfahren nach einem der Ansprüche 1 bis 4, **dadurch gekennzeichnet, daß** die Deckscheibe (10) vor dem Auflegen auf das Folienvorlaminat mit einer haftungsmindernden dünnen Trennschicht versehen wird.

6. Verfahren nach einem der Ansprüche 1 bis 5, **dadurch gekennzeichnet, daß** die Trägerfolie (4) des Folienvorlaminats vor dem Auflegen der Deckscheibe (10) mit einer haftungsmindernden dünnen Trennschicht versehen wird.

7. Verfahren nach Anspruch 5 oder 6, **dadurch gekennzeichnet, daß** als Trennschicht eine Trennfolie (6) verwendet wird, die unter den Bedingungen des Verfahrensschritts (c) weder an der Deckscheibe (10) noch an der Trägerfolie (4) haftet.

8. Verfahren nach einem der Ansprüche 1 bis 7, **dadurch gekennzeichnet, daß** die erste und die zweite Verbundschicht (2, 5) aus Polyvinylbutyral (PVB) oder Ethylenvinylacetat-Copolymeren (EVA) bestehen.

9. Verfahren nach einem der Ansprüche 1 bis 8, **dadurch gekennzeichnet, daß** eine Trägerfolie (4) aus PET (Polyethylenterephthalat) verwendet wird.

10. Verfahren nach einem der Ansprüche 2 bis 9, **dadurch gekennzeichnet, daß** die Verfahrensschritte (c) und (f) bei Temperaturen durchgeführt werden, die so weit unter der maximalen Temperatur des Endverbunds gemäß Verfahrensschritt (g) liegen, daß das Wärmeschrumpfvermögen der Trägerfolie (4) in beiden Verstreckungsrichtungen beim Verfahrensschritt (g) noch mind. 10%, vorzugsweise noch mind. 20% ihres vor Verfahrensschritt (a) vorhandenen Wärmeschrumpfvermögens beträgt.

11. Verfahren nach einem der Ansprüche 1 bis 10, **dadurch gekennzeichnet, daß** der Verfahrensschritt (c) bei einem Druck von max. 2,5 bar und einer Temperatur erfolgt, die mind. 10 Grad, vorzugsweise mind. 50 Grad, unter der maximal beim Endverbund gemäß Verfahrensschritt (g) angewandten Temperatur liegt.

12. Verfahren nach einem der Ansprüche 1 bis 11, **dadurch gekennzeichnet, daß** der Verfahrensschritt (f) bei einem Druck von max. 2,5 bar und einer Temperatur erfolgt, die mind. 10 Grad unter der maximal beim Endverbund gemäß Verfahrensschritt (g) angewandten Temperatur liegt.

13. Verfahren nach einem der Ansprüche 1 bis 12, **dadurch gekennzeichnet, daß** der Endverbund gemäß Verfahrensschritt (g) bei einer Temperatur von etwa 115 - 135°C und einem Druck von max. 13 bar durchgeführt wird.

## Claims

1. Process for the manufacture of a bent laminated safety glass pane consisting of a first bent glass pane (1), a first laminating layer (2), a thermoplastic substrate film (4) provided with a thin-layer system (3), a second laminating layer (5) and a second glass pane (10) bent to conform to the first bent glass pane, with the following process steps:
(a) A film prelaminate, consisting of the first laminating layer and the substrate film (4) is placed with its laminating layer surface on the first glass pane (1),
(b) a rigid cover pane (10) bent to conform to the first glass pane (1) is placed on the film prelaminate,
(c) the glass/films sandwich formed by the first glass pane (1) and the film prelaminate is deaerated and pre-bonded by application of pressure and heat,
(d) the cover pane (10) is removed,
(e) the second laminating layer (5) and the second glass pane (10) are applied to the pre-bonded glass/films sandwich,
(f) the laminate so formed is deaerated and pre-bonded by application of pressure and heat,
(g) the pre-bonded laminate is finally bonded by application of pressure and heat to form a laminated safety glass pane.

2. Process in accordance with claim 1, **characterized by** the fact that a biaxially stretched substrate film (4) is used.

3. Process in accordance with claim 1 or 2, **characterized by** the fact that a film prelaminate is used, where the thin-layer system (3) of the substrate film (4) neighbours the first laminating layer (2).

4. Process in accordance with one of claims 1 to 3, **characterized by** the fact that the second glass pane (10) is used as cover pane (10).

5. Process in accordance with one of claims 1 to 4, **characterized by** the fact that, prior to being placed on the film prelaminate, the cover pane (10) is provided with a thin adhesion-reducing separating layer.

6. Process in accordance with one of claims 1 to 5, **characterized by** the fact that, prior to the cover pane (10) being placed in position, the substrate film (4) of the film prelaminate is provided with a thin adhesion-reducing separating layer.

7. Process in accordance with claim 5 or 6, **characterized by** the fact that as separating layer a separating film is used which, under the conditions of Process Step (c), adheres neither to the cover pane (10), nor to the substrate film (4).

8. Process in accordance with claim 1 to 7, **characterized by** the fact that the first and the second laminating layer (2, 5) consist of polyvinylbutyral (PVB) or ethylene/vinyl acetate copolymers (EVA).

9. Process in accordance with one of claims 1 to 8, **characterized by** the fact that a substrate film (4) of PET (polyethylene terephthalate) is used.

10. Process in accordance with one of claims 2 to 9, **characterized by** the fact that Process Steps (c) and (f) are carried out at temperatures which are so far below the maximum temperature of the final bonding step according to Process Step (g) that the thermal shrinkage capacity of the substrate film (4) in both stretching directions during Process Step (g) is still at least 10 %, preferably at least 20 % of its thermal shrinkage capacity present prior to Process Step (a).

11. Process in accordance with one of claims 1 to 10, **characterized by** the fact that Process Step (c) takes place at a maximum pressure of 2.5 bar and a temperature which is at least 10 °C, but preferably at least 50 °C below the temperature employed during the final bonding step according to Process Step (g).

12. Process in accordance with one of claims 1 to 11, **characterized by** the fact that Process Step (f) takes place at a maximum pressure of 2.5 bar and a temperature which is at least 10 °C below the maximum temperature employed during final bonding according to Process Step (g).

13. Process in accordance with one of claims 1 to 12, **characterized by** the fact that the final bonding step according to Process Step (g) is carried out at a temperature of approximately 115 - 135 °C and at a maximum pressure of 13 bar.

## Revendications

1. Procédé de fabrication d'une vitre de sécurité feuilletée incurvée constituée d'une première vitre incurvée (1), d'une première couche feuilletée (2), d'un film support thermoplastique (4) doté d'un système à couche mince (3), d'une seconde couche feuilletée (5) et d'une seconde vitre incurvée adaptée à la première (10), comportant les étapes de procédé consistant à :
(a) déposer un pré-stratifié en feuille constitué de la première couche feuilletée (2) et du film support (4), côté couche feuilletée sur la première vitre (1),
(b) déposer sur le pré-stratifié en feuille une vitre de couverture incurvée et résistant à la flexion (10) s'adaptant à la première vitre (1),
(c) chasser l'air de l'ensemble en verre feuilleté formé par la première vitre (1) et le pré-stratifié en feuille et pré-assembler par apport de pression et de chaleur,
(d) ôter la vitre de couverture (10),
(e) déposer la seconde couche feuilletée (5) et la seconde vitre (10) sur l'ensemble en verre feuilleté pré-assemblé,
(f) chasser l'air du stratifié ainsi formé et pré-assembler par apport de pression et de chaleur,
(g) réaliser l'assemblage final du stratifié pré-assemblé par apport de pression et de chaleur pour obtenir une vitre de sécurité feuilletée.

2. Procédé selon la revendication 1, **caractérisé en ce que** l'on utilise un film support étiré biaxialement (4).

3. Procédé selon la revendication 1 ou 2, **caractérisé en ce que** l'on utilise un pré-stratifié en feuille dans lequel le système à couche mince (3) du film support (4) jouxte la première couche feuilletée (2).

4. Procédé selon l'une des revendications 1 à 3, **caractérisé en ce que** la seconde vitre (10) fait office de vitre de couverture (10).

5. Procédé selon l'une des revendications 1 à 4, **caractérisé en ce que** la vitre de couverture (10) est pourvue d'une mince couche de séparation réduisant l'adhérence, avant d'être déposée sur le pré-stratifié en feuille.

6. Procédé selon l'une des revendications 1 à 5, **caractérisé en ce que** le film support (4) du pré-stratifié en feuille est pourvu d'une mince couche de séparation réduisant l'adhérence avant que la vitre de couverture (10) ne soit déposée.

7. Procédé selon la revendication 5 ou 6, **caractérisé en ce que** l'on utilise comme couche de séparation une feuille de séparation (6) qui, dans les conditions de l'étape (c) du procédé, n'adhère ni à la vitre de couverture (10) ni au film support (4).

8. Procédé selon l'une des revendications 1 à 7, **caractérisé en ce que** les première et seconde couches feuilletées (2, 5) se composent de copolymères de type polybutyral de vinyle (PVB) ou acétate de vinyle et éthylène (EVA).

9. Procédé selon l'une des revendications 1 à 8, **caractérisé en ce que** l'on utilise un film support (4) en téréphtalate de polyéthylène (PET).

10. Procédé selon l'une des revendications 2 à 9, **caractérisé en ce que** les étapes (c) et (f) du procédé sont exécutées à des températures inférieures à la température maximale de l'assemblage final selon l'étape (g) du procédé telles que le pouvoir de rétraction à la chaleur du film support (4) dans les deux directions d'étirement équivaut au cours de l'étape (g) du procédé à encore au moins 10 %, de préférence à encore au moins 20 % du pouvoir de rétraction à la chaleur qu'il présente avant l'étape (a) du procédé.

11. Procédé selon l'une des revendications 1 à 10, **caractérisé en ce que** l'étape (c) du procédé est exécutée à une pression maximale de 2,5 bars et à une température qui est d'au moins 10 degrés, de préférence d'au moins 50 degrés inférieure à la température maximale utilisée au cours de l'étape (g) du procédé dans le cadre de l'assemblage final.

12. Procédé selon l'une des revendications 1 à 11, **caractérisé en ce que** l'étape (f) du procédé est exécutée à une pression maximale de 2,5 bars et à une température qui est d'au moins 10 degrés inférieure à la température maximale utilisée au cours de l'étape (g) du procédé dans le cadre de l'assemblage final.

13. Procédé selon l'une des revendications 1 à 12, **caractérisé en ce que** l'assemblage final selon l'étape (g) du procédé est exécuté à une température de l'ordre de 115 à 135 °C et à une pression maximale de 13 bars.
